# EUROPÄISCHE PATENTSCHRIFT

(11) **EP 3 513 886 B1**
(45) Veröffentlichungstag und Bekanntmachung des Hinweises auf die Patenterteilung: **21.09.2022**
(21) Anmeldenummer: 18206888.2
(22) Anmeldetag: 19.11.2018
(51) Int. Cl.: H01M 50/20

(54) **VERFAHREN ZUM HERSTELLEN VON ZELLVERBINDERN**
METHOD FOR PRODUCING CELL-CONNECTORS
PROCÉDÉ DE FABRICATION DE CONNECTEURS DE CELLULES

(30) Priorität: 19.01.2018 DE 102018200875
(43) Veröffentlichungstag der Anmeldung: 24.07.2019
(73) Patentinhaber: Otto Bihler Handels-Beteiligungs-GmbH, 87642 Halblech (DE)
(72) Erfinder: Haußmann, Bernd, 87645 Schwangau (DE)
(74) Vertreter: Weickmann & Weickmann PartmbB

(56) Entgegenhaltungen:
- EP-A2- 0 313 760
- DE-A1-102016 200 961
- JP-A- S55 126 327
- US-A- 3 838 590
- US-B1- 6 195 874

## Beschreibung

Die vorliegende Erfindung betrifft ein Verfahren zum Herstellen von Zellverbindern, eine Vorrichtung zum Herstellen von Zellverbindern mittels eines derartigen Verfahrens.

Derartige Zellverbinder werden zum elektrisch leitfähigen Verbinden von elektrochemischen Zellen eingesetzt und insbesondere benötigt, um aus den einzelnen Zellen sogenannte Batteriepacks oder Batteriemodule zu bilden, die beispielsweise in elektrisch betriebenen Fahrzeugen zum Einsatz kommen können. Hierbei werden in der Regel mehrere der Zellen in Reihe geschaltet, um auf diese Art eine ausreichend hohe Ausgangsspannung des gesamten Batteriepacks erzielen zu können. Um ferner die in üblichen Anwendungen gewünschten hohen Leistungen und damit verbundenen hohen Ströme bereitstellen zu können, ist dafür zu sorgen, dass elektrische Verluste innerhalb des Batteriepacks möglichst gering gehalten werden, wodurch ein Bedarf nach Zellverbindern mit einem möglichst niedrigen elektrischen Widerstand besteht.

Da die Zellverbinder jedoch nicht nur zum Leiten von elektrischem Strom in dem Batteriepack dienen, sondern vielmehr auch zu dessen mechanischer Stabilität beitragen müssen, sind auch unter diesem Gesichtspunkt hohe Anforderungen an die Beschaffenheit derartiger Zellverbinder gestellt. Insbesondere werden diese in der Regel als streifenförmige Blechteile ausgebildet, die in regelmäßigen Abständen geometrische Formgebungen, wie beispielsweise Nuten, aufweisen, so dass sie Dehnungen und Stauchungen, die beispielsweise durch verschieden starke thermische Erwärmung und damit Ausdehnung einzelner Batteriezellen in dem Batteriepack auftreten können, in einer Weise abfangen können, die die gesamte strukturelle Stabilität und Integrität des Batteriepacks nicht gefährdet, sondern in einem vorbestimmten Umfang eine relative Verlagerung der einzelnen Zellen untereinander gestattet.

Es ist daher notwendig, die Zellverbinder aus einem Material mit einem niedrigen elektrischen Widerstand und wohldefinierten elektrischen und mechanischen Eigenschaften herzustellen, wobei insbesondere darauf zu achten ist, dass der elektrische Widerstand der Zellverbinder über ihre gesamte Ausdehnung im Wesentlichen konstant ist, so dass auch beim Leiten großer Ströme und Transportieren großer Leistungen keine starke punktuelle Erhitzung in Bereichen mit vergrößertem Widerstand auftreten kann, da diese bei der enorm hohen Kapazität von modernen Lithium-Ionen-Akkumulatoren zu sehr gefährlichen unerwünschten Betriebszuständen führen könnte.

Aufgrund dieser hohen Anforderungen an Materialwahl und Beschaffenheit derartiger Zellverbinder ist beispielsweise in der DE 10 2012 100 862 A1 ein Zellverbinder vorgeschlagen worden, der aus zwei oder mehr Materiallagen besteht, welche mittels mindestens eines mechanischen Fügeelements miteinander verbunden sind. Wenngleich auf diese Weise die gewünschten Eigenschaften des Zellverbinders wohl erreicht werden können, so ist seine Herstellung aus mehreren Materiallagen und einem zusätzlichen mechanischen Fügeelement doch sehr kosten- und zeitintensiv, so dass eine Nachfrage nach einem einfacheren und günstigeren Verfahren zum Herstellen von Zellverbindern mit gleichbleibend hoher Qualität besteht.

Ferner sei auf die DE 10 2016 200 961 A1, die JP S55 126327 A, die EP 0 313 760 A2, die US 6 195 874 B1 und die US 3 838 590 A verwiesen, welche jeweils Verfahren und /oder Vorrichtungen zum Herstellen von Zellverbindern lehren.

Andererseits hat sich gezeigt, dass sich in an sich bekannten Tiefziehprozessen, in denen die oben beschriebenen geometrischen Formgebungen mittels Druckwerkzeugen in Form von Biegegesenken und Beigestempeln in streifenförmige Metallbleche eingebracht werden, starke Fluktuationen in der Blechstärke des Metallblechs, insbesondere im Bereich der stärksten Verformung an den einzelnen geometrischen Formgebungen, ergeben. Es erscheint daher nicht möglich, die geforderte hohe Präzision hinsichtlich einer gleichmäßigen Stärke von Zellverbindern und damit eines gleichbleibenden elektrischen Widerstands über ihre gesamten Abmessungen in mittels eines Tiefziehprozesses hergestellten Zellverbindern zu gewährleisten.

Es ist hinsichtlich der genannten Probleme die Aufgabe der vorliegenden Erfindung, ein Verfahren zum Herstellen von Zellverbindern bereitzustellen, das einerseits einfach und kostengünstig durchzuführen ist, und andererseits hervorragende mechanische und elektrische Eigenschaften des Zellverbinders gewährleistet, insbesondere hinsichtlich einer sehr präzise konstant gehaltenen Dicke des Zellverbinders auch im Bereich seiner geometrischen Formgebungen.

Hierzu umfasst das erfindungsgemäße Verfahren zum Herstellen von Zellverbindern die folgenden Schritte:
a) Bereitstellen eines streifenförmigen, elektrisch leitfähigen Rohlings mit vorbestimmten Abmessungen in einer Längsrichtung und einer Breitenrichtung;
b) Einspannen des Rohlings in einem vorbestimmten ersten Haltebereich durch eine erste Klemmvorrichtung sowie in einem vorbestimmten zweiten Haltebereich durch eine zweite Klemmvorrichtung;
c) relatives Bewegen der ersten Klemmvorrichtung und der zweiten Klemmvorrichtung aufeinander zu im Wesentlichen entlang der Längsrichtung des Rohlings, wodurch sich der Rohling ausbeult und somit eine im Wesentlichen in Breitenrichtung des Rohlings verlaufende geometrische Formgebung gebildet wird;
d) Freigeben des Rohlings durch die beiden Klemmvorrichtungen; und
e) Auswerfen des derart gebildeten Zellverbinders.

Es ist der Verdienst der Erfinder der vorliegenden Erfindung, festgestellt zu haben, dass im Gegensatz zu einem Tiefziehprozess, in dem die Wandstärke des streifenförmigen Rohlings durch das Tiefziehen der geometrischen Formgebungen im Bereich dieser geometrischen Formgebungen nicht konstant gehalten werden kann, bei dem erfindungsgemäßen Prozess, der ein "Zusammenschieben" des Rohlings umfasst, die Wandstärke des so hergestellten Zellverbinders über dessen gesamte Ausmaße mit einer sehr hohen Präzision konstant gehalten werden kann. Somit ist es durch das erfindungsgemäße Verfahren möglich, mit einem Arbeits- und Kostenaufwand, der vergleichbar mit einem Tiefziehprozess ist, Zellverbinder herzustellen, die den oben beschriebenen hohen Anforderungen an derartige Komponenten genügen.

Sofern gewünscht ist, Zellverbinder mit einer Mehrzahl von geometrischen Formgebungen herzustellen, mittels derer dementsprechend mehr als drei elektrochemische Zellen zu Batteriepacks oder Batteriemodulen zusammengefasst werden können, können die Schritte b) bis d) des erfindungsgemäßen Verfahrens mehrfach nacheinander durchgeführt werden, so dass eine Mehrzahl von geometrischen Formgebungen an dem Rohling gebildet wird und folglich beim abschließenden Schritt e) ein Zellverbinder mit einer Mehrzahl von geometrischen Formgebungen ausgeworfen wird.

Hierbei gibt es prinzipiell zunächst einmal zwei Möglichkeiten zum Bilden der Mehrzahl von geometrischen Formgebungen, die jedoch selbstverständlich auch miteinander kombiniert werden könnten, so dass ein Teil der geometrischen Formgebungen mittels des ersten Herstellungsprinzips hergestellt werden kann, während ein weiterer Teil der geometrischen Formgebungen mittels der zweiten Variante hergestellt werden kann.

Gemäß der ersten Variante kann der Rohling zwischen jedem Schritt d) und dem darauffolgenden weiteren Schritt b) jeweils entlang seiner Längsrichtung vorgeschoben werden, und die Schritte b) bis d) können stets von derselben ersten und zweiten Klemmvorrichtung durchgeführt werden. Es versteht sich, dass hierzu wenigstens die in der Vorschubrichtung des Rohlings liegende der beiden Klemmvorrichtungen weit genug freigebbar sein muss, um ein Vorschieben des Rohlings auch mit bereits daran befindlicher geometrischer Formgebung durch die entsprechende Klemmvorrichtung zu ermöglichen. Ferner kann durch die Wahl des Betrags des Vorschubs zwischen jedem Schritt d) und jedem weiteren Schritt b) der Abstand der geometrischen Formgebungen untereinander an dem resultierenden Zellverbinder eingestellt werden, wobei insbesondere in einem Fall, in dem äquidistante geometrischen Formgebungen gewünscht sind, der jeweilige Vorschub stets identisch zu wählen ist.

Gemäß der angesprochenen zweiten Variante kann der Rohling zwischen wenigstens einem Schritt d) und dem darauffolgenden weiteren Schritt b) von einer ersten Station, welche die erste und die zweite Klemmvorrichtung umfasst, zu einer zweiten Station überführt werden, welche eine weitere erste und eine weitere zweite Klemmvorrichtung umfasst, wobei die Überführung beispielsweise in Breitenrichtung des Rohlings erfolgen kann.

Diese zweite Variante bietet sich beispielsweise in Fällen an, in denen zwischen dem jeweiligen Schritt d) und dem darauffolgenden Schritt b) weitere Bearbeitungsschritte an dem Rohling vorgenommen werden sollen oder in Fällen, in denen Klemmvorrichtungen verwendet werden sollen oder müssen, die nicht weit genug freigegeben werden können, um einen Vorschub der bereits mit geometrischen Formgebungen versehenen Rohlinge durch sie hindurch zu ermöglichen, da insbesondere bei einer Überführung des Rohlings in seiner Breitenrichtung von einer der genannten Stationen zur jeweils nächsten die Klemmvorrichtungen einen wesentlich geringeren Freigabehub aufweisen müssen und letztlich gerade eine ausreichende Freigabe des Rohlings zu seiner Entnahme ermöglichen müssen.

Erfindungsgemäß verbleibt die erste Klemmvorrichtung während des Schritts c) oder jedes der Schritte c) im Wesentlichen ortsfest, während die zweite Klemmvorrichtung entlang der Längsrichtung des Rohlings verlagert wird.

Wenngleich es bereits durch eine geeignete Wahl der Parameter des relativen Bewegens der ersten Klemmvorrichtung und der zweiten Klemmvorrichtung aufeinander zu in Schritt c) möglich ist, die vorgesehene Form der in diesem Schritt erzeugten geometrischen Formgebung festzulegen, so erfindungsgemäß vorgesehen, während dieses Schritts c) zwischen der ersten und der zweiten Klemmvorrichtung einen Stempel in die Ebene des Rohlings einzuführen. Durch Einführen dieses Stempels wird die Bildung der geometrischen Formgebung mit erhöhter Prozesssicherheit angestoßen und der Rohling wird im Bereich seiner entstehenden geometrischen Formgebung von der Seite des Stempels her abgestützt, so dass diese Ausführung zu einer weiteren Verbesserung bzw. Sicherstellung der Qualität des herzustellenden Zellverbinders beitragen kann, insbesondere hinsichtlich seiner strukturellen Eigenschaften im Bereich der auf diese Weise erzeugten geometrischen Formgebung.

Erfindungsgemäß verläuft die Einführbewegung des Stempels schräg zur Ebene des Rohlings und umfasst eine Komponente in Richtung auf die erste Klemmvorrichtung . Somit bewegt sich der Stempel in dieser Variante in dieselbe Richtung wie die zweite Klemmvorrichtung auf die erste Klemmvorrichtung zu, jedoch ist auch hier auf die Koordination zwischen diesen beiden Bewegungen zu achten, so dass während des Herstellens der geometrischen Formgebung an dem Rohling keine zusätzlichen Spannungen oder Verzerrungen entstehen können.

Gemäß einem zweiten Aspekt der vorliegenden Erfindung betrifft diese eine Vorrichtung zum Herstellen von Zellverbindern mittels eines erfindungsgemäßen Verfahrens, umfassend eine Zufuhrvorrichtung für streifenförmige Rohlinge, wenigstens eine Station, umfassend eine erste und eine zweite Klemmvorrichtung mit einem Paar komplementärer Klemmbacken zum Einspannen eines Rohlings und eine Auswurfvorrichtung zum Auswerfen des hergestellten Zellverbinders, wobei die wenigstens eine Station ferner eine Verlagerungseinrichtung umfasst, welche dazu eingerichtet ist, die erste und die zweite Klemmvorrichtung relativ zueinander im Wesentlichen entlang der Längsrichtung des Rohlings zu verlagern. Es ist ersichtlich, dass mit dieser Vorrichtung das erfindungsgemäße Verfahren durchgeführt werden kann, da der Betrieb der Verlagerungseinrichtung mit einem in der ersten und zweiten Klemmvorrichtung eingespannten Rohling die oben beschriebene Erzeugung einer geometrischen Formgebung an dem Rohling in dessen Breitenrichtung verlaufend herbeiführen wird.

In einer Ausführungsform kann die wenigstens eine Station der erfindungsgemäßen Vorrichtung ferner eine Vorschubeinrichtung umfassen, welche dazu eingerichtet ist, den Rohling in nicht eingespanntem Zustand bezüglich der ersten und zweiten Klemmvorrichtung entlang seiner Längsrichtung vorzuschieben. Mit einer derartigen Vorrichtung kann das oben bereits angesprochene Verfahren derart durchgeführt werden, dass eine Mehrzahl von geometrischen Formgebungen an dem Rohling sequenziell an derselben Station erzeugt wird.

Andererseits kann die erfindungsgemäße Vorrichtung jedoch auch eine Mehrzahl von Stationen und eine Überführungseinrichtung, welche dazu eingerichtet ist, Rohlinge von einer der Stationen zu einer anderen der Stationen zu überführen, umfassen. Mit dieser Variante der erfindungsgemäßen Vorrichtung lässt sich ein Verfahren durchführen, in dem wenigstens zwei der geometrischen Formgebungen an einem Rohling in verschiedenen Stationen hergestellt werden.

Um sicherzustellen, dass die in der erfindungsgemäßen Vorrichtung hergestellten Zellverbinder geometrische Formgebungen mit der gewünschten Form und einer präzise eingehaltenen Wanddicke aufweisen, sind ferner die Klemmbacken mit Innenkonturen gebildet, welche der vorgesehenen Außenkontur der geometrischen Formgebungen des herzustellenden Zellverbinders entsprechen und/oder kann die wenigstens eine Station ferner einen bezüglich der Ebene des eingespannten Rohlings verlagerbaren Stempel umfassen, welcher in Längsrichtung des eingespannten Rohlings zwischen der ersten und der zweiten Klemmvorrichtung angeordnet ist und vorzugsweise eine Außenkontur aufweist, welche der vorgesehenen Innenkontur der geometrischen Formgebung des herzustellenden Zellverbinders entspricht.

In der zweiten der eben genannten Varianten kann der Stempel ferner bezüglich wenigstens einer der Klemmvorrichtungen in Längsrichtung des eingespannten Rohlings verlagerbar sein.

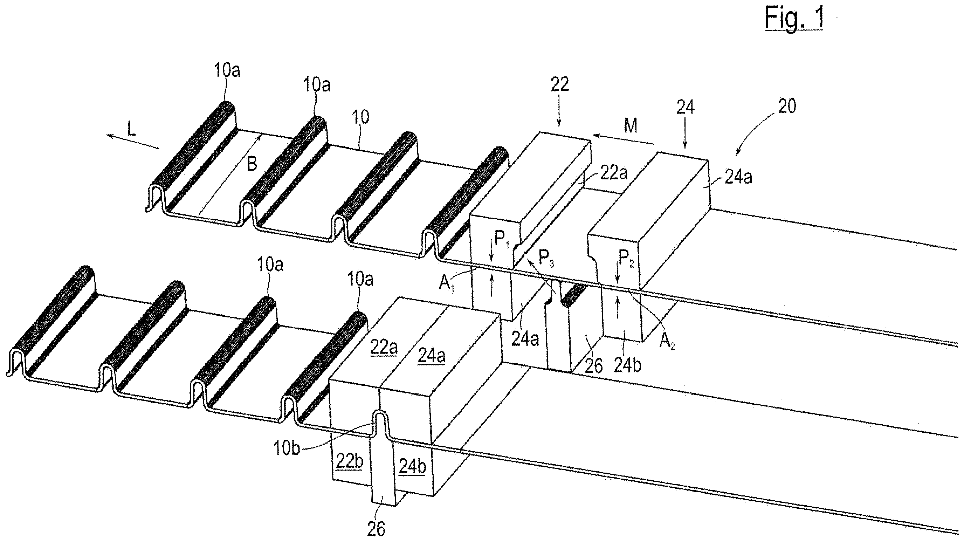

Weitere Merkmale und Vorteile der vorliegenden Erfindung werden aus der nachfolgenden Beschreibung einer Ausführungsform deutlich, wenn diese zusammen mit der beiliegenden Figur 1 betrachtet wird. Diese zeigt:
- Figur 1: eine schematische Darstellung eines erfindungsgemäßen Verfahrens und einer erfindungsgemäßen Vorrichtung zur Herstellung eines Zellverbinders.

Figur 1 zeigt zwei Schritte während der Herstellung eines Zellverbinders mit einem erfindungsgemäßen Verfahren, wobei der in der Figur 1 oben dargestellte Schritt 1 und der unten dargestellte Schritt 2 zeitlich aufeinander folgen. In beiden Darstellungen ist ein Rohling 10 aus einem Metallblech mit einer Mehrzahl von bereits daran gefertigten geometrischen Formgebungen (Nuten) 10a zu erkennen, die in Breitenrichtung B des Rohlings 10, d.h. senkrecht zu seiner Längsrichtung L verlaufen. Die geometrischen Formgebungen 10a sind in regelmäßigen Abständen an dem Rohling 10 vorgesehen, wobei nach Abschluss des erfindungsgemäßen Verfahrens ein fertig hergestellter Zellverbinder aus dem Rohling 10 erhalten werden wird.

Lediglich rein schematisch sind Komponenten einer Vorrichtung 20 zum Durchführen des erfindungsgemäßen Verfahrens in der Figur 1 in zwei Zuständen gezeigt. Die Vorrichtung 20 umfasst zwei Klemmvorrichtungen 22 und 24 mit jeweiligen Paaren von Klemmbacken 22a, 22b und 24a, 24b, die zusammen eine Station zum Biegen des Rohlings 10 bilden. Des Weiteren umfasst die Vorrichtung 20 unter anderem einen Stempel 26, eine nicht gezeigte Verlagerungseinrichtung für die zweite Klemmvorrichtung 24 und eine ebenfalls nicht gezeigte Vorschubvorrichtung für den Stempel 26.

In der in der Figur 1 oben gezeigten ersten Darstellung wird der Rohling 10 gerade von den beiden Klemmvorrichtungen 22 und 24 mittels ihrer jeweiligen Klemmbacken 22a, 22b und 24a, 24b in einem ersten Haltebereich A₁ bzw. einem zweiten Haltebereich A₂ eingespannt, indem sich die Paare von Klemmbacken 22a, 22b und 24a, 24b jeweils entlang der Pfeile P₁ und P₂ aufeinander zu bewegen. Der Stempel 26 befindet sich hierbei momentan unterhalb der Ebene des Rohlings 10 und ist mit diesem zunächst nicht in Eingriff.

Um nun von der oberen Darstellung aus Figur 1 zu der unteren Darstellung aus Figur 1 überzugehen, bewegt die nicht dargestellte Verlagerungseinrichtung die zweite Klemmvorrichtung 24 entlang der Längsrichtung L des Rohlings 10 dem Pfeil V folgend auf die erste Klemmvorrichtung 22 zu, während gleichzeitig der Stempel 26 durch seine Bewegungseinrichtung in Richtung des Pfeils P₃ schräg in die Ebene des Rohlings 10 hineinbewegt wird. Hierdurch wird der Rohling 10 im Bereich des Eingriffs mit dem Stempel 26 nach oben gebogen, wobei die relative Verlagerung der beiden Klemmvorrichtungen 22 und 24 aufeinander zu ein Auswölben des Rohlings 10 in dem Bereich zwischen ihnen hervorrufen, bis schlussendlich der in Figur 1 unten gezeigte Zustand erreicht wird, in dem eine weitere neue geometrische Formgebung 10b an dem Rohling 10 ausgebildet ist. Hierbei ist zu erkennen, dass die Klemmbacken 22a, 22b und 24a, 24b sowie der Stempel 26 mit Innen- bzw. Außenkonturen gebildet sind, die einerseits der Außen- bzw. Innenkontur der neu an dem Rohling 10 erzeugten geometrischen Formgebung 10b entsprechen und andererseits eine Aufnahme des Stempels 26 zwischen den Klemmbacken 22a, 22b und 24a, 24b ermöglichen.

Indem auf das Erreichen des in Figur 1 unten gezeigten Zustands hin nun die Klemmvorrichtungen 22 und 24 wieder freigegeben werden, d.h. entgegen der Pfeile P₁ und P₂ aus der oberen Darstellung aus Figur 1 die Paare von Klemmbacken 22a, 22b und 24a, 24b auseinander bewegt werden und gleichzeitig der Stempel 26 nach unten aus der Ebene des Rohlings 10 herausbewegt wird, kann der Rohling 10 freigegeben werden, so dass er anschließend aus der Vorrichtung 20 entnommen werden kann.

Hierauf folgend kann nun die zweite Klemmvorrichtung 24 zusammen mit dem Stempel 26 zurück in die in Figur 1 gezeigte Relativposition bezüglich der ersten Klemmvorrichtung 22 hinsichtlich der Längsrichtung R des Rohlings 10 im noch freigegebenen Zustand überführt werden. Anschließend ist die Vorrichtung 20 für das erneute Durchführen des dargestellten Vorgangs einsatzbereit, der dann durch ein erneutes Einklemmen desselben oder eines anderen Rohlings 10 in den Klemmvorrichtungen 22 und 24 gemäß der oberen Darstellung aus Figur 1 beginnen wird.

Zuletzt sei darauf hingewiesen, dass die Mehrzahl von geometrischen Formgebungen 10a und 10b an einem Rohling in einer ersten möglichen Ausführungsform sämtlich lediglich mit den gezeigten Klemmbacken 22 und 24 und dem Stempel 26 erzeugt werden könnten, wobei dann ein Vorschub des Rohlings 10 in seiner Längsrichtung L zwischen zwei Biegevorgängen durchgeführt werden müsste.

Hierbei müsste dann selbstverständlich die erste Klemmvorrichtung 22 ermöglichen, ihre Klemmbacken 22a und 22b weit genug entgegen dem Pfeil P₁ aus der oberen Darstellung in Figur 1 auseinander zu bewegen, um eine Durchführung der geometrischen Formgebungen 10a zwischen diesen beiden Klemmbacken 22a und 22b zu ermöglichen. Andererseits könnte der Rohling 10 jedoch auch an eine nicht dargestellte zweite Station weitergegeben werden, die dementsprechend ein weiteres Paar von Klemmvorrichtungen und einen weiteren Stempel umfassen und einen identischen Prozess wie die gezeigte Station durchführen würde.

## Patentansprüche

1. Verfahren zum Herstellen von Zellverbindern, umfassend die Schritte:
a) Bereitstellen eines streifenförmigen, elektrisch leitfähigen Rohlings (10) mit vorbestimmten Abmessungen in einer Längsrichtung (L) und einer Breitenrichtung (B);
b) Einspannen des Rohlings (10) in einem vorbestimmten ersten Haltebereich (A₁) durch eine erste Klemmvorrichtung (22) sowie in einem vorbestimmten zweiten Haltebereich (A₂) durch eine zweite Klemmvorrichtung (24);
c) relatives Bewegen der ersten Klemmvorrichtung (22) und der zweiten Klemmvorrichtung (24) aufeinander zu im Wesentlichen entlang der Längsrichtung (L) des Rohlings (10), wodurch sich der Rohling (10) ausbeult und somit eine im Wesentlichen in Breitenrichtung (B) des Rohlings (10) verlaufende geometrische Formgebung (10a, 10b) gebildet wird;
d) Freigeben des Rohlings (10) durch die beiden Klemmvorrichtungen (22, 24); und
e) Auswerfen des derart gebildeten Zellverbinders, wobei die erste Klemmvorrichtung (22) während des Schritts c) im Wesentlichen ortsfest verbleibt, während die zweite Klemmvorrichtung (24) entlang der Längsrichtung (L) des Rohlings (10) verlagert wird, und während des Schritts c) zwischen der ersten und der zweiten Klemmvorrichtung (22, 24) ein Stempel (26) in die Ebene des Rohlings (10) eingeführt wird,
**dadurch gekennzeichnet, dass** die Einführbewegung des Stempels (26) schräg zur Ebene des Rohlings (20) verläuft und eine Komponente in Richtung auf die erste Klemmvorrichtung (22) zu umfasst.

2. Verfahren nach Anspruch 1, wobei die Schritte b) bis d) mehrfach nacheinander durchgeführt werden, so dass eine Mehrzahl von geometrischen Formgebungen (10a, 10b) an dem Rohling (10) gebildet wird.

3. Verfahren nach Anspruch 2, wobei der Rohling (10) zwischen jedem Schritt d) und dem darauffolgenden weiteren Schritt b) jeweils entlang seiner Längsrichtung (L) vorgeschoben wird und die Schritte b) bis d) stets von derselben ersten und zweiten Klemmvorrichtung (22, 24) durchgeführt werden.

4. Verfahren nach Anspruch 2, wobei der Rohling (10) zwischen wenigstens einem Schritt d) und dem darauffolgenden weiteren Schritt b) von einer ersten Station, welche die erste und die zweite Klemmvorrichtung (22, 24) umfasst, zu einer zweiten Station überführt wird, welche eine weitere erste und zweite Klemmvorrichtung umfasst, wobei die Überführung beispielsweise in Breitenrichtung (B) des Rohlings erfolgen kann.

5. Vorrichtung zum Herstellen von Zellverbindern mittels eines Verfahrens nach einem der vorhergehenden Ansprüche, umfassend:
- eine Zufuhrvorrichtung für streifenförmige Rohlinge (10);
- wenigstens eine Station, umfassend eine erste und eine zweite Klemmvorrichtung (22, 24) mit einem Paar komplementärer Klemmbacken (22a, 22b; 24a, 24b) zum Einspannen eines Rohlings (10); und
- eine Auswurfvorrichtung zum Auswerfen des hergestellten Zellverbinders;
wobei die wenigstens eine Station ferner eine Verlagerungseinrichtung umfasst, welche dazu eingerichtet ist, die erste und die zweite Klemmvorrichtung (22, 24) relativ zueinander im Wesentlichen entlang der Längsrichtung (L) des Rohlings (10) zu verlagern,
wobei die zweite Klemmvorrichtung (22) während des Verlagerns im Wesentlichen ortsfest verbleibt, während die zweite Klemmvorrichtung (24) entlang der Längsrichtung (L) des Rohlings verlagert wird, wobei während des Verlagerns zwischen der ersten und der zweiten Klemmvorrichtung (22, 24) ein Stempel (26) in die Ebene des Rohlings (10) verläuft,
**dadurch gekennzeichnet, dass** die Klemmbacken (22a, 22b; 24a, 24b) ferner mit Innenkonturen gebildet sind, welche der vorgesehenen Außenkontur der geometrischen Formgebung (10a, 10b) des herzustellenden Zellverbinders entsprechen, und dass die Einführbewegung des Stempels (26) schräg zur Ebene des Rohlings (20) verläuft und eine Komponente in Richtung auf die erste Klemmvorrichtung (22) zu umfasst.

6. Vorrichtung nach Anspruch 5, wobei die wenigstens eine Station ferner eine Vorschubeinrichtung umfasst, welche dazu eingerichtet ist, den Rohling (10) in nicht eingespanntem Zustand bezüglich der ersten und zweiten Klemmvorrichtung (22, 24) entlang seiner Längsrichtung (L) vorzuschieben.

7. Vorrichtung nach einem der Ansprüche 5 und 6, umfassend eine Mehrzahl von Stationen und eine Überführungseinrichtung, welche dazu eingerichtet ist, Rohlinge (10) von einer der Stationen zu einer anderen zu überführen.

8. Vorrichtung nach einem der Ansprüche 5 bis 7, wobei die wenigstens eine Station ferner einen bezüglich der Ebene des eingespannten Rohlings (10) verlagerbaren Stempel (26) umfasst, welcher in Längsrichtung (L) des eingespannten Rohlings (10) zwischen der ersten und der zweiten Klemmvorrichtung (22, 24) angeordnet ist und vorzugsweise eine Außenkontur aufweist, welche der vorgesehenen Innenkontur der geometrischen Formgebung (10a, 10b) des herzustellenden Zellverbinders entspricht.

9. Vorrichtung nach Anspruch 8, wobei der Stempel (26) ferner bezüglich wenigstens einer der Klemmvorrichtungen (22, 24) in Längsrichtung (L) des eingespannten Rohlings (10) verlagerbar ist.

## Claims

1. Method for producing cell connectors, comprising the steps of:
a) providing a strip-shaped, electrically conductive blank (10) having predetermined dimensions in a longitudinal direction (L) and a width direction (B);
b) clamping the blank (10) in a predetermined first holding region (A₁) by means of a first clamping device (22) and in a predetermined second holding region (A₂) by means of a second clamping device (24);
c) relative movement of the first clamping device (22) and the second clamping device (24) towards one another substantially in the longitudinal direction (L) of the blank (10), as a result of which the blank (10) bulges and thus a geometric shape (10a, 10b) extending substantially in the width direction (B) of the blank (10) is formed;
d) releasing the blank (10) by means of the two clamping devices (22, 24); and
e) ejecting the cell connector formed in this way, the first clamping device (22) remaining substantially stationary during step c), while the second clamping device (24) is displaced in the longitudinal direction (L) of the blank (10), and during step c) a punch (26) being inserted into the plane of the blank (10) between the first and the second clamping device (22, 24),
**characterised in that** the insertion movement of the punch (26) extends at an angle to the plane of the blank (20) and comprises a component in the direction of the first clamping device (22).

2. Method according to claim 1, wherein steps b) to d) are carried out multiple times in succession, so that a plurality of geometric shapes (10a, 10b) are formed on the blank (10).

3. Method according to claim 2, wherein the blank (10) is fed in its longitudinal direction (L) between each step d) and the subsequent further step b), and steps b) to d) are always carried out by the same first and the second clamping device (22, 24).

4. Method according to claim 2, wherein the blank (10) is transferred between at least one step d) and the subsequent further step b) from a first station, which comprises the first and the second clamping device (22, 24), to a second station, which comprises a further first and a further second clamping device, wherein the transfer can take place, for example, in the width direction (B) of the blank.

5. Device for producing cell connectors by means of a method according to any of the preceding claims, comprising:
- a supply device for strip-shaped blanks (10);
- at least one station, comprising a first and a second clamping device (22, 24) having a pair of complementary clamping jaws (22a, 22b; 24a, 24b) for clamping a blank (10); and
- an ejection device for ejecting the produced cell connector;
the at least one station further comprising a displacement device which is configured to displace the first and the second clamping device (22, 24) relative to one another substantially in the longitudinal direction (L) of the blank (10),
the second clamping device (22) remaining substantially stationary during the displacement, while the second clamping device (24) is displaced in the longitudinal direction (L) of the blank, and during the displacement between the first and the second clamping device (22, 24) a punch (26) extending in the plane of the blank (10),
**characterised in that** the clamping jaws (22a, 22b; 24a, 24b) are also formed with inner contours which correspond to the intended outer contour of the geometric shape (10a, 10b) of the cell connector to be produced, and **in that** the insertion movement of the punch (26) extends at an angle to the plane of the blank (20) and comprises a component in the direction of the first clamping device (22).

6. Device according to claim 5, wherein the at least one station further comprises a feed device which is configured to feed the blank (10) in the unclamped state relative to the first and the second clamping device (22, 24) in its longitudinal direction (L).

7. Device according to either claim 5 and claim 6, comprising a plurality of stations and a transfer device which is configured to transfer blanks (10) from one of the stations to another.

8. Device according to any of claims 5 to 7, wherein the at least one station further comprises a punch (26) which can be displaced with respect to the plane of the clamped blank (10) and which is arranged between the first and the second clamping device (22, 24) in the longitudinal direction (L) of the clamped blank (10) and preferably has an outer contour which corresponds to the intended inner contour of the geometric shape (10a, 10b) of the cell connector to be produced.

9. Device according to claim 8, wherein the punch (26) can also be displaced with respect to at least one of the clamping devices (22, 24) in the longitudinal direction (L) of the clamped blank (10).

## Revendications

1. Procédé de fabrication de connecteurs de cellules, comprenant les étapes suivantes :
a) préparation d'une ébauche (10) en forme de bande, électriquement conductrice, ayant des dimensions prédéterminées dans une direction longitudinale (L) et une direction de largeur (B) ;
b) serrage de l'ébauche (10) dans une première zone de maintien prédéterminée (A₁) par un premier dispositif de serrage (22) ainsi que dans une deuxième zone de maintien prédéterminée (A₂) par un deuxième dispositif de serrage (24) ;
c) replacement relatif du premier dispositif de serrage (22) et du deuxième dispositif de serrage (24) l'un vers l'autre sensiblement le long de la direction longitudinale (L) de l'ébauche (10), ce qui fait que l'ébauche (10) se bombe et forme ainsi une forme géométrique (10a, 10b) s'étendant sensiblement dans la direction de largeur (B) de l'ébauche (10) ;
d) libération de l'ébauche (10) par les deux dispositifs de serrage (22, 24) ; et
e) éjection du connecteur cellulaire ainsi formé, le premier dispositif de serrage (22) restant sensiblement fixe pendant l'étape c), tandis que le deuxième dispositif de serrage (24) est déplacé le long de la direction longitudinale (L) de l'ébauche (10), et pendant l'étape c), entre le premier et le deuxième dispositif de serrage (22, 24), un poinçon (26) est introduit dans le plan de l'ébauche (10),
**caractérisé en ce que** le mouvement d'introduction du poinçon (26) est oblique par rapport au plan de l'ébauche (20) et comprend une composante en direction du premier dispositif de serrage (22).

2. Procédé selon la revendication 1, dans lequel les étapes b) à d) sont réalisées plusieurs fois successivement, de manière à former une pluralité de conformations géométriques (10a, 10b) sur l'ébauche (10).

3. Procédé selon la revendication 2, dans lequel l'ébauche (10) est avancée le long de sa direction longitudinale (L) entre chaque étape d) et l'étape suivante b), et les étapes b) à d) sont toujours réalisées par le même premier et le même deuxième dispositif de serrage (22, 24).

4. Procédé selon la revendication 2, dans lequel l'ébauche (10) est transférée, entre au moins une étape d) et l'étape supplémentaire b) suivante, d'un premier poste comprenant le premier et le deuxième dispositif de serrage (22, 24) à un deuxième poste comprenant un autre premier et un autre deuxième dispositif de serrage, le transfert pouvant par exemple être effectué dans la direction de largeur (B) de l'ébauche.

5. Dispositif de fabrication de connecteurs de cellules au moyen d'un procédé selon l'une quelconque des revendications précédentes, comprenant :
- un dispositif d'alimentation en ébauches (10) en forme de bande ;
- au moins un poste comprenant un premier et un deuxième dispositif de serrage (22, 24) avec une paire de mâchoires complémentaires (22a, 22b ; 24a, 24b) pour serrer une ébauche (10) ; et
- un dispositif d'éjection pour éjecter le connecteur de cellules fabriqué ;
dans lequel ledit au moins un poste comprend en outre un dispositif de déplacement adapté pour déplacer le premier et le deuxième dispositif de serrage (22, 24) l'un par rapport à l'autre sensiblement le long de la direction longitudinale (L) de l'ébauche (10), le deuxième dispositif de serrage (22) restant sensiblement fixe pendant le déplacement, tandis que le deuxième dispositif de serrage (24) est déplacé le long de la direction longitudinale (L) de l'ébauche, un poinçon (26) s'étendant dans le plan de l'ébauche (10) entre le premier et le deuxième dispositif de serrage (22, 24) pendant le déplacement,
**caractérisé en ce que** les mâchoires (22a, 22b ; 24a, 24b) sont en outre formées avec des contours intérieurs correspondant au contour extérieur prévu de la conformation géométrique (10a, 10b) du connecteur cellulaire à réaliser, et **en ce que** le mouvement d'introduction du poinçon (26) est oblique par rapport au plan de l'ébauche (20) et comprend une composante en direction du premier dispositif de serrage (22).

6. Dispositif selon la revendication 5, dans lequel ledit au moins un poste comprend en outre un dispositif d'avancement agencé pour faire avancer l'ébauche (10) à l'état non serré par rapport aux premier et deuxième dispositifs de serrage (22, 24) le long de sa direction longitudinale (L).

7. Dispositif selon l'une des revendications 5 et 6, comprenant une pluralité de postes et un dispositif de transfert agencé pour transférer des ébauches (10) d'un des postes à un autre.

8. Dispositif selon l'une des revendications 5 à 7, dans lequel ledit au moins une station comprend en outre un poinçon (26) déplaçable par rapport au plan de l'ébauche (10) serrée, qui est disposé dans la direction longitudinale (L) de l'ébauche (10) serrée entre le premier et le deuxième dispositif de serrage (22, 24) et qui présente de préférence un contour extérieur qui correspond au contour intérieur prévu de la forme géométrique (10a, 10b) du connecteur de cellules à fabriquer.

9. Dispositif selon la revendication 8, dans lequel le poinçon (26) peut en outre être déplacé par rapport à au moins l'un des dispositifs de serrage (22, 24) dans la direction longitudinale (L) de l'ébauche (10) serrée.
